# EUROPÄISCHE PATENTSCHRIFT

(11) **EP 4 282 241 B1**
(45) Veröffentlichungstag und Bekanntmachung des Hinweises auf die Patenterteilung: **11.06.2025**
(21) Anmeldenummer: 23401016.3
(22) Anmeldetag: 15.05.2023
(51) Int. Cl.: A01B 69/04, A01C 7/08

(54) **ELEKTRONISCHE DATENVERARBEITUNGSEINRICHTUNG UND VERFAHREN ZUM PLANEN EINES SÄVORGANGS IN FAHRGASSEN AUF EINER LANDWIRTSCHAFTLICHEN NUTZFLÄCHE**
ELECTRONIC DATA PROCESSING DEVICE AND METHOD FOR PLANNING A SOWING PROCESS ON TRAVEL LANES ON AN AGRICULTURAL FIELD
DISPOSITIF DE TRAITEMENT DE DONNÉES ÉLECTRONIQUE ET PROCÉDÉ DE PLANIFICATION D'UNE OPÉRATION D'ENSEMENCEMENT SUR DES VOIES JALONNÉES SUR UNE SURFACE AGRICOLE

(30) Priorität: 24.05.2022 DE 102022113063
(43) Veröffentlichungstag der Anmeldung: 29.11.2023
(73) Patentinhaber: Amazonen-Werke H. Dreyer SE & Co. KG, 49205 Hasbergen (DE)
(72) Erfinder: Kühn, Christoph, 49186 Bad Iburg (DE); Heer, Jochen, 49074 Osnabrück (DE)

(56) Entgegenhaltungen:
- EP-A1- 0 193 804
- EP-A1- 3 970 463
- EP-A2- 1 692 928
- WO-A2-2009/143399
- DE-A1- 102016 114 532
- DE-A1- 102020 109 018

## Beschreibung

Die Erfindung betrifft ein Verfahren zum Planen eines zu einem Fahrgassensystem auf einer landwirtschaftlichen Nutzfläche führenden Sävorgangs nach dem Oberbegriff des Patentanspruchs 1, ein Verfahren zum Anlegen eines Fahrgassensystems auf einer landwirtschaftlichen Nutzfläche nach dem Oberbegriff des Patentanspruchs 8 sowie eine elektronische Datenverarbeitungseinrichtung zum Planen eines zu einem Fahrgassensystem auf einer landwirtschaftlichen Nutzfläche führenden Sävorgangs nach dem Oberbegriff des Patentanspruch 12.

Beim Bearbeiten einer landwirtschaftlichen Nutzfläche mittels landwirtschaftlicher Maschinen werden die Bearbeitungsvorgänge in der Praxis häufig vorgeplant, sodass die Nutzfläche effizient und vollständig bearbeitet werden kann. Bei der Planung der Bearbeitungsvorgänge werden insbesondere die Fahrtrouten der die Nutzfläche befahrenen Maschinen berücksichtigt. Die Fahrtrouten werden dabei üblicherweise von einem vorab erstellten und nutzflächenspezifischen Fahrgassenverlaufsplan vorgegeben. Bei der Planung der Bearbeitungsvorgänge auf Grundlage eines Fahrgassenverlaufsplans muss vor allem berücksichtigt werden, in welchen Bereichen die Räder einer Maschine oder die Räder eines Zug- oder Trägerfahrzeugs einer Anbaumaschine das Feld befahren. Die so entstehenden Fahrspuren müssen bereits bei der Planung eines Sävorgangs mittels einer Sämaschine beachtet werden, sodass die Sämaschine in Bereichen, in denen die Nutzfläche von den Rädern befahren wird, kein Saatgut ausbringt. Auf diese Weise werden die vorgeplanten Fahrgassen durch den Sävorgang auf der landwirtschaftlichen Nutzfläche von der Sämaschine angelegt.

Um Fahrgassen bei einem Sävorgang auf einer landwirtschaftlichen Nutzfläche anzulegen, werden im Stand der Technik die Fahrspuren beim Säen ausgelassen. Die Druckschrift EP 0 730 819 A1 zeigt beispielsweise eine Sämaschine, bei welcher zum Anlegen eines Fahrgassensystems die Saatgutzufuhr zu bestimmten Säscharen rechnergestützt in Intervallen unter Berücksichtigung der Position und Bewegungsrichtung der Sämaschine unterbrochen wird.

Das Anlegen eines Fahrgassensystems auf einer landwirtschaftlichen Nutzfläche mittels eines Sävorgangs ist insofern bekannt. Bisher werden im Stand der Technik beim Anlegen des Fahrgassensystems allerdings nur die Fahrspuren berücksichtigt, in denen die Sämaschine aktuell fährt. Außerdem ist aus der Druckschrift DE 10 2016 114 532 A1 ein Verfahren bekannt, bei dem auch Fahrspuren nachfolgender Arbeitsvorgänge, welche ein Vielfaches der Arbeitsbreite der Sämaschine aufweisen, berücksichtigt werden. Fahrspuren abseits einer aktuellen Fahrtroute der Sämaschine, beispielsweise Fahrspuren eines Wendemanövers zwischen den parallelen Fahrspuren, welche die Sämaschine teilweise bei der Fahrt im Vorgewende kreuzt, werden bisher mit Saatgut versehen, sodass in diesen Bereichen Nutzpflanzen wachsen, welche bei allen folgenden Bearbeitungsvorgängen der Nutzfläche, beispielsweise beim Ausbringen von Dünger oder Pflanzenschutzmitteln, überrollt und dadurch zerstört werden. Somit wird Saatgut verschwendet und ein gleichmäßiger Aufwuchs der Nutzpflanzen gestört, wodurch es zu Ernteverlusten kommt.

Die der Erfindung zugrunde liegende Aufgabe besteht somit darin, den Sävorgang einer landwirtschaftlichen Sämaschine auf einer landwirtschaftlichen Nutzfläche so zu optimieren, dass alle Fahrgassen einer Nutzfläche vollständig beim Sävorgang berücksichtigt und angelegt werden, um folglich Saatgutverschwendung zu verhindern und einen gleichmäßigen Aufwuchs der Nutzpflanzen sicherzustellen.

Die Aufgabe wird gelöst mit einem Verfahren zum Planen eines Sävorgangs der eingangs genannten Art, wobei die ermittelten Steuerungsvorgaben zusätzlich ein temporäres und bereichsweises Unterbrechen der Saatgutablage zum Anlegen von fahrtroutenabschnittsfremden Fahrgassenabschnitten vorgeben, welche nicht entlang der jeweiligen Routenabschnitte verlaufen.

Durch das Planen eines Sävorgangs, bei welchem die Saatgutablage zusätzlich in fahrtroutenabschnittsfremden Fahrgassenabschnitten unterbrochen wird, werden durch den geplanten Sävorgang sämtliche Fahrspuren für landwirtschaftliche Maschinen auf einer landwirtschaftlichen Nutzfläche ausgespart und somit ein vollständiges Fahrgassensystem auf der Nutzfläche angelegt, welches auch abseits der aktuellen Fahrtroute der Sämaschine sowohl die parallelen Fahrspuren als auch das Vorgewende sowie alle weiteren Fahrmanöver, beispielsweise Kurvenfahrten, Wendemanöver und Feldein- und Ausfahrten, umfasst. Somit wird in allen Bereichen der Nutzfläche, in denen die Räder eines Zug- oder Trägerfahrzeugs einer landwirtschaftlichen Maschine, insbesondere der Sämaschine und/oder landwirtschaftlicher Maschinen nachfolgender Arbeitsvorgänge, die Nutzfläche überrollen, kein Saatgut ausgebracht, sodass dort entsprechend keine Pflanzen wachsen. Durch das Aussparen sämtlicher Fahrspuren wird folglich Saatgut eingespart und das Zerstören von Pflanzen verhindert.

Die fahrtroutenabschnittsfolgenden Fahrgassenabschnitte sind vorzugsweise jeweils einem Routenabschnitt zugeordnet. Die jeweils einander zugeordneten fahrtroutenabschnittsfolgenden Fahrgassenabschnitte und Routenabschnitte haben den gleichen Verlauf. Die elektronische Datenverarbeitungseinrichtung kann ein PC, ein Server oder ein mobiles Endgerät, insbesondere ein Smartphone oder Tablet, sein. Die elektronische Datenverarbeitungseinrichtung kann als Bedienterminal für die Sämaschine ausgebildet sein. Der Fahrgassenverlaufsplan kann mittels eines elektronischen Datenverarbeitungsgeräts, beispielsweise mittels eines PCs, erstellt werden. Die Steuerungsvorgaben enthalten vorzugsweise Informationen zu dem Fahrgassenverlauf auf der landwirtschaftlichen Nutzfläche. Die Steuerungsvorgaben enthalten vorzugsweise Informationen zu dem geplanten Bewegungspfad der Sämaschine zum Bewegen der Sämaschine entlang der Fahrtroute. Die Steuerungsvorgaben enthalten vorzugsweise die Zeitpunkte und/oder die Zeitintervalle des Unterbrechens der Saatgutablage.

In einer bevorzugten Ausführungsform des erfindungsgemäßen Verfahrens zum Planen eines Sävorgangs werden beim temporären und bereichsweisen Unterbrechen der Saatgutablage eine oder mehrere Dosiereinrichtungen für Saatgut temporär abgeschaltet, wobei die Steuerungsvorgaben Schaltvorgänge zum Abschalten der einen oder der mehreren Dosiereinrichtungen vorgeben. Die eine oder die mehreren Dosiereinrichtungen für Saatgut dosieren die abzulegende Saatgutmenge. Die eine oder die mehreren Dosiereinrichtungen sind Bestandteile der Sämaschine. Die eine oder die mehreren Dosiereinrichtungen sind vorzugsweise als Vereinzelungseinrichtungen ausgebildet. Vorzugsweise ist jeder Saatgutablageeinrichtung jeweils eine Dosiereinrichtung zugeordnet. Das Abschalten einer oder mehrerer Dosiereinrichtungen kann beispielsweise mittels einer der jeweiligen Dosiereinrichtung zugeordneten Aktorik und/oder mittels Verschließen und/oder Verstellen von Klappen und/oder Weichen erfolgen. Die Steuerungsvorgaben enthalten vorzugsweise Informationen, zu welchen Zeitpunkten die Klappen und/oder Weichen der Dosiereinrichtung zu bewegen sind und/oder zu welchen Zeitpunkten Aktorik angesteuert werden müssen. Bei Einzelkornsämaschinen umfasst vorzugsweise jede Saatgutablageeinrichtung einen oder mehrere Behälter für Ausbringgut, beispielsweise für Saatgut und/oder Dünger, wobei die Dosiervorrichtung aus dem jeweiligen Behälter Ausbringgut bezieht. Eine als Vereinzelungsvorrichtung ausgebildete Dosiereinrichtung separiert Saatgut in einzelne Körner, sodass diese vereinzelt auf der landwirtschaftlichen Nutzfläche abgelegt werden können.

In einer anderen bevorzugten Ausführungsform des erfindungsgemäßen Verfahrens zum Planen eines Sävorgangs werden beim temporären und bereichsweisen Unterbrechen der Saatgutablage ein oder mehrere Saatgutströme zu einer oder zu mehreren Saatgutablageeinrichtungen temporär unterbrochen, wobei die Steuerungsvorgaben zum Unterbrechen des einen oder der mehreren Saatgutströme vorzugsweise Schaltvorgänge zum temporären Verschließen und Öffnen von einer oder mehreren Saatgutleitungen vorgeben. Mittels der Saatgutleitungen wird das Saatgut von einer Verteileinrichtung, beispielsweise einem Verteilerkopf, der Sämaschine zu Saatgutablageeinrichtungen zur Ablage des Saatguts auf der Nutzfläche transportiert. Das Verschließen und Öffnen der einen oder der mehreren Saatgutleitungen erfolgt vorzugsweise mittels zumindest einer Klappe oder Weiche. Die Klappen oder Weichen können sich in der Verteileinrichtung der Sämaschine befinden, mittels welcher das Saatgut auf die einzelnen Saatgutablageeinrichtungen der Sämaschine verteilt wird. Die Steuerungsvorgaben enthalten vorzugsweise Informationen, zu welchen Zeitpunkten die Klappen zum Verschließen oder Öffnen der jeweiligen Saatgutleitung zu bewegen sind.

Darüber hinaus ist ein erfindungsgemäßes Verfahren zum Planen eines Sävorgangs vorteilhaft, bei welchem die fahrtroutenabschnittsfolgenden Fahrgassenabschnitte und die fahrtroutenabschnittsfremden Fahrgassenabschnitte jeweils zwei Fahrspuren umfassen, wobei die Steuerungsvorgaben ein temporäres und bereichsweises Unterbrechen der Saatgutablage vorgeben, sodass während des Anlegens der fahrtroutenabschnittsfolgenden Fahrgassenabschnitte zeitweise eine oder beide Fahrspuren der fahrtroutenabschnittsfremden Fahrgassenabschnitte erzeugt werden. Erfindungsgemäß ist vorgesehen, dass die Fahrspuren der fahrtroutenabschnittsfolgenden Fahrgassenabschnitte und die Fahrspuren der fahrtroutenabschnittsfremden Fahrgassenabschnitte sich kreuzen und/oder zumindest teilweise überlappen. Die fahrtroutenabschnittsfolgenden Fahrgassenabschnitte und die fahrtroutenabschnittsfremden Fahrgassenabschnitte verlaufen zumindest teilweise beabstandet voneinander. Beim Anlegen des Fahrgassensystems auf der landwirtschaftlichen Nutzfläche werden zeitweise gleichzeitig drei Fahrspuren erzeugt. Beim Anlegen des Fahrgassensystems auf der landwirtschaftlichen Nutzfläche werden zeitweise gleichzeitig vier Fahrspuren erzeugt. Es sind gleichzeitig drei Fahrspuren zu erzeugen, wenn die Sämaschine gleichzeitig einen zwei Fahrspuren umfassenden fahrtroutenabschnittsfolgenden Fahrgassenabschnitt und eine Fahrspur eines fahrtroutenabschnittsfremden Fahrgassenabschnitts anlegen soll. Es sind gleichzeitig vier Fahrspuren zu erzeugen, wenn die Sämaschine gleichzeitig einen zwei Fahrspuren umfassenden fahrtroutenabschnittsfolgenden Fahrgassenabschnitt und die zwei Fahrspuren eines fahrtroutenabschnittsfremden Fahrgassenabschnitts anlegen soll.

Es ist ferner ein erfindungsgemäßes Verfahren zum Planen eines Sävorgangs bevorzugt, bei welchem die fahrtroutenabschnittsfremden Fahrgassenabschnitte gekrümmte und/oder gradlinige Abschnitte umfassen. Gekrümmte Abschnitte der fahrtroutenfremden Fahrgassenabschnitte können Wendeabschnitte und/oder Kurvenabschnitte der fahrtroutenfremden Fahrgassenabschnitte sein. Wendeabschnitte können beispielsweise im Wesentlichen spiralförmige, beispielsweise geschlossene oder nicht geschlossene kreisförmige oder ovale, Wendeabschnitte umfassen. Wendeabschnitte und/oder Kurvenabschnitte können zudem Rückwärtsfahrten der Sämaschine und/oder Rückwärtsfahrten weiterer landwirtschaftlicher Maschinen auf den Sävorgang folgender Arbeitsvorgänge umfassen. Weitere landwirtschaftliche Maschine können beispielsweise Feldspritzen oder Düngerstreuer sein. Gradlinige Abschnitte der fahrtroutenfremden Fahrgassenabschnitte können Vorgewendeabschnitte und/oder Feldein- und/oder Feldausfahrten der fahrtroutenfremden Fahrgassenabschnitte sein. Vorgewendeabschnitte können beispielsweise Rückwärtseinfahrten der Sämaschine und/oder der weiteren landwirtschaftlichen Maschinen in Feldecken einer landwirtschaftlichen Nutzfläche umfassen. Gradlinige Abschnitte der fahrtroutenfremden Fahrgassenabschnitte können zudem Rückwärtsfahrten der Sämaschine abseits von Vorgewendeabschnitten, beispielsweise Rückwärtsfahrten bei Fahrmanövern und/oder Fahrtrichtungswechseln der Sämaschine im Feldinnern, umfassen.

In einer Weiterbildung des erfindungsgemäßen Verfahrens zum Planen eines Sävorgangs erfolgt das Ermitteln des Fahrgassenverlaufsplans für die landwirtschaftliche Nutzfläche auf Grundlage eines oder mehrerer bereits erfolgter Bearbeitungsvorgänge. Während eines zurückliegenden Bearbeitungsvorgangs auf der landwirtschaftlichen Nutzfläche, beispielsweise im Vorjahr, wurde die Fahrroute der Maschine, insbesondere mittels GPS, ermittelt und gespeichert, sodass diese als Vorlage für den Fahrgassenverlaufsplan dienen kann. Während eines Bearbeitungsvorgangs wird also der Fahrweg auf der landwirtschaftlichen Nutzfläche erfasst, sodass der daraus erstellte Fahrgassenverlaufsplan für nachfolgende Bearbeitungsvorgänge in nachfolgenden Jahren nutzbar ist. Der eine oder die mehreren bereits erfolgten Bearbeitungsvorgänge können Sävorgänge und/oder auf Sävorgänge folgende Bearbeitungsvorgänge, beispielsweise mittels einer Feldspritze oder mittels eines Düngerstreuers, sein.

In einer weiteren bevorzugten Ausführungsform des erfindungsgemäßen Verfahrens zum Planen eines Sävorgangs werden beim Ermitteln des Fahrgassenverlaufsplans die Maschineneigenschaften von Maschinen berücksichtigt, welche das anzulegende Fahrgassensystem bei nachfolgenden Bearbeitungsvorgängen befahren sollen. Eine Maschineneigenschaft kann beispielsweise die Arbeitsbreite der landwirtschaftlichen Maschinen sein. Eine Maschineneigenschaft kann beispielsweise der Wendekreis und/oder ein einstellbarer Kurvenradius der landwirtschaftlichen Maschinen sein. Um beispielsweise auf der gesamten Nutzfläche abseits der Fahrgassen vollständig Ausbringgut, wie beispielsweise Saatgut, Streugut (Dünger) und/oder Spritzmittel, ausbringen zu können, muss beim Planen der Fahrgassen, insbesondere bei den Abständen einzelner Fahrgassen voneinander, berücksichtigt werden, auf welcher Breite eine Sämaschine Saatgut, eine Streumaschine Streugut (Dünger) und/oder eine Feldspritze Spritzmittel ausbringen kann.

Die der Erfindung zugrundeliegende Aufgabe wird weiterhin durch ein Verfahren zum Anlegen eines Fahrgassensystems der eingangs genannten Art gelöst, wobei die Saatgutablage während des Bewegens der Sämaschine entlang der Fahrtroute zum Anlegen von fahrtroutenabschnittsfremden Fahrgassenabschnitten, welche nicht entlang der jeweiligen Routenabschnitte verlaufen, auf Grundlage der Steuerungsvorgaben temporär und bereichsweise unterbrochen wird.

In einer Weiterbildung des erfindungsgemäßen Verfahrens zum Anlegen eines Fahrgassensystems wird der Sävorgang mittels einer elektronischen Datenverarbeitungseinrichtung geplant, wobei die Steuerungsvorgaben beim Planen des Sävorgangs ermittelt werden. Das Planen des Sävorgangs erfolgt mittels eines Verfahrens zum Planen eines Sävorgangs gemäß einer der vorstehend beschriebenen Ausführungsformen. Hinsichtlich der Vorteile und Modifikationen des erfindungsgemäßen Verfahrens zum Anlegen eines Fahrgassensystems wird somit zunächst auf die Vorteile und Modifikationen des erfindungsgemäßen Verfahrens zum Planen eines Sävorgangs verwiesen.

In einer weiteren bevorzugten Ausführungsform des erfindungsgemäßen Verfahrens zum Anlegen eines Fahrgassensystems erfolgt das temporäre und bereichsweise Unterbrechen der Saatgutablage zum Anlegen der fahrtroutenabschnittsfolgenden Fahrgassenabschnitte und/oder zum Anlegen der fahrtroutenabschnittsfremden Fahrgassenabschnitte selbsttätig, wobei die Sämaschine zum selbsttätigen Unterbrechen der Saatgutablage vorzugsweise mittels einer Steuerungseinrichtung auf Grundlage der Steuerungsvorgaben gesteuert wird. Das temporäre und bereichsweise Unterbrechen der Saatgutablage erfolgt vorzugsweise selbsttätig ohne Eingriff eines Benutzers der Sämaschine. Zudem kann das Bewegen der Sämaschine auf der Fahrtroute selbsttätig erfolgen. Die Steuerungseinrichtung kann Bestandteil eines Bedienterminals der Sämaschine sein. Die Steuerungseinrichtung kann ein maschinenexternes Gerät, beispielsweise ein PC oder Server, sein. Die Steuerungseinrichtung kann ein mobiles Endgerät, beispielsweise ein Smartphone oder ein Tablet sein. Die Steuerungseinrichtung ist dazu eingerichtet, den Sävorgang und/oder das Bewegen der Sämaschine auf der landwirtschaftlichen Nutzfläche selbsttätig zu steuern. Zum selbsttätigen Steuern der Sämaschine ist die Steuerungseinrichtung dazu eingerichtet, Steuerungsvorgaben zum Anlegen des Fahrgassensystems auf der landwirtschaftlichen Nutzfläche auszulesen, beispielsweise von einem Speichermedium, auszuwerten und daraus konkrete Maschinenanweisungen an die Sämaschine zu senden, sodass diese beispielsweise zu einem definierten Zeitpunkt die Saatgutablage unterbricht.

Es ist weiterhin ein erfindungsgemäßes Verfahren zum Anlegen eines Fahrgassensystems vorteilhaft, bei welchem Fahrgassendaten über auf der landwirtschaftlichen Nutzfläche angelegte Fahrgassen mittels einer Datenerfassungseinrichtung aufgezeichnet und/oder gespeichert werden und/oder wobei die auf der landwirtschaftlichen Nutzfläche angelegten Fahrgassen auf einer elektronischen Anzeigevorrichtung während des Sävorgangs dargestellt wird. Durch das Aufzeichnen und/oder Speichern und/oder Anzeigen der Fahrgassendaten wird eine Kontrolle des Arbeitsprozesses des Anlegens des Fahrgassensystems ermöglicht. Durch die Kontrolle des Arbeitsprozesses können Fehler und/oder Abweichungen des angelegten Fahrgassensystems von dem Fahrgassenverlaufsplan frühzeitig erkannt werden und ein Benutzereingriff erfolgen. Zum Aufzeichnen der Fahrgassendaten kann die Datenerfassungseinrichtung die Position der Sämaschine beim Sävorgang, des Streuers beim Streuvorgang und/oder der Feldspritze beim Spritzvorgang erfassen und abspeichern, beispielsweise per GPS. Die Datenerfassungseinrichtung kann Bestandteil der Sämaschine, des Streuers und/oder der Feldspritze sein. Die Datenerfassungseinrichtung kann Bestandteil eines Bedienterminals für die Sämaschine, des Streuers und/oder der Feldspritze sein. Die Datenerfassungseinrichtung kann signal- und/oder datenleitend mit der elektronischen Datenverarbeitungseinrichtung verbunden sein.

Die der Erfindung zugrundeliegende Aufgabe wird ferner durch eine elektronische Datenverarbeitungseinrichtung der eingangs genannten Art gelöst, wobei die elektronische Datenverarbeitungseinrichtung dazu eingerichtet ist, das Verfahren Planen eines Sävorgangs nach einer der vorstehenden Ausführungsformen auszuführen. Hinsichtlich der Vorteile und Modifikationen der erfindungsgemäßen elektronischen Datenverarbeitungseinrichtung wird somit auf die Vorteile und Modifikationen des erfindungsgemäßen Verfahrens zum Planen eines Sävorgangs verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: einen Fahrgassenverlaufsplan auf einer landwirtschaftlichen Nutzfläche in einer Draufsicht;
- Fig. 2: den Ausschnitt A des Fahrgassenverlaufsplans aus Fig. 1 mit einer Sämaschine während eines Sävorgangs beim Anlegen von vier Fahrspuren eines Fahrgassensystems auf der landwirtschaftlichen Nutzfläche;
- Fig. 3: den Ausschnitt A des Fahrgassenverlaufsplans aus Fig. 1 mit einer Sämaschine während eines Sävorgangs beim Anlegen von drei Fahrspuren eines Fahrgassensystems auf der landwirtschaftlichen Nutzfläche; und
- Fig. 4: eine Sämaschine mit einer erfindungsgemäßen elektronischen Datenverarbeitungseinrichtung beim Anlegen von Fahrspuren auf einer landwirtschaftlichen Nutzfläche in einer schematischen Ansicht.

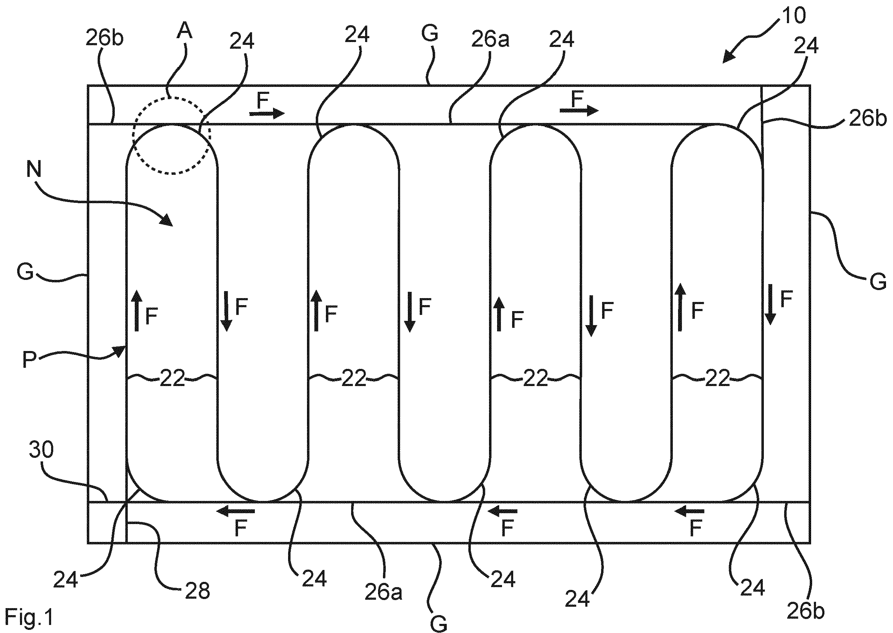

Die Fig. 1 zeigt einen Fahrgassenverlaufsplan 10 für eine landwirtschaftliche Nutzfläche N, welcher als Grundlage zum Anlegen eines Fahrgassensystems auf der landwirtschaftlichen Nutzfläche N mittels einer Sämaschine 100 dient.

Die Sämaschine 100 bewegt sich in ihrer Fahrtrichtung F entlang eines von dem Fahrgassenverlaufsplan 10 vorgegebenen Bewegungspfad P, welcher Feldeinfahrten und/oder Feldausfahrten 28, Parallelfahrten 22, Vorgewendefahrten 26a, 26b sowie Wendemanöver 24 umfasst. Die Sämaschine kann beispielsweise über eine Feldeinfahrt 28 die die Nutzfläche N umgebene Feldgrenze G passieren und zunächst die Parallelfahrten 22 ausführen, wobei die Sämaschine 100 zwischen den Parallelfahrten 22 Wendemanöver 24 in Form von 180 Grad Kehren und/oder 90 Grad Kurven ausführt. Die Wendemanöver 24 und die Parallelfahrten 22 können außerdem Fahrmanöver mit Rückwärtsfahrten der Sämaschine 100 umfassen.

Im weiteren Verlauf des Sävorgangs führt die Sämaschine beispielsweise die Vorgewendefahrten 26a sowie die Vorgewendefahrten 26b aus. Die Vorgewendefahrten 26a, 26b ermöglichen es, dass auf der gesamten landwirtschaftlichen Nutzfläche N bis an die Feldgrenzen G Saatgut 112 ausgebracht werden kann. Die Vorgewendefahrten 26b sind vorzugsweise Rückwärtsfahrten der Sämaschine 100 in die Feldecken der Nutzfläche N. Die Vorgewendefahrten 26b können auch für Rückwärtsfahrten weiterer landwirtschaftlicher Maschinen, insbesondere für auf den Sävorgang folgende Arbeitsvorgänge, beispielsweise das Spritzen mittels einer Feldspritze, vorgesehen sein. Nach dem erfolgten Sävorgang kann die Sämaschine die Nutzfläche über eine Feldausfahrt 30 wieder verlassen.

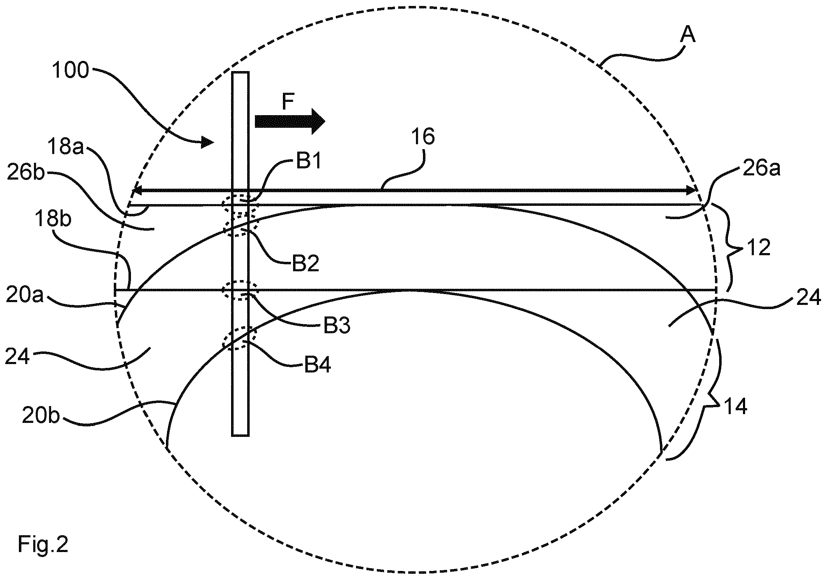

In Fig. 2 ist der Ausschnitt A aus Fig. 1 in einer detaillierteren schematischen Ansicht dargestellt. Die Sämaschine 100 bewegt sich mit ihrer Fahrtrichtung F entlang des Routenabschnitts 16, welcher die Vorgewendefahrten 26a, 26b des Bewegungspfads P der Sämaschine 100 umfasst. Entlang des Routenabschnitts 16 verläuft ein fahrtroutenabschnittsfolgender Fahrgassenabschnitt 12, in welchem die Sämaschine 100 während des Sävorgangs in den Bereichen B1, B3 die Fahrspuren 18a, 18b des Fahrgassensystems auf der landwirtschaftlichen Nutzfläche N erzeugt. Zudem passiert die Sämaschine 100 einen fahrtroutenabschnittsfremden Fahrgassenabschnitt 14 eines Wendemanövers 24 des Bewegungspfads P der Sämaschine 100, in welchem die Sämaschine 100 während des Sävorgangs in den Bereichen B2, B4 die Fahrspuren 20a, 20b des Fahrgassensystems auf der landwirtschaftlichen Nutzfläche N erzeugt. Die Fahrspuren 18a, 18b und die Fahrspuren 20a, 20b werden erzeugt, indem die Sämaschine 100 während des Sävorgangs die Saatgutablage temporär und bereichsweise in den Bereichen B1-B4 unterbricht.

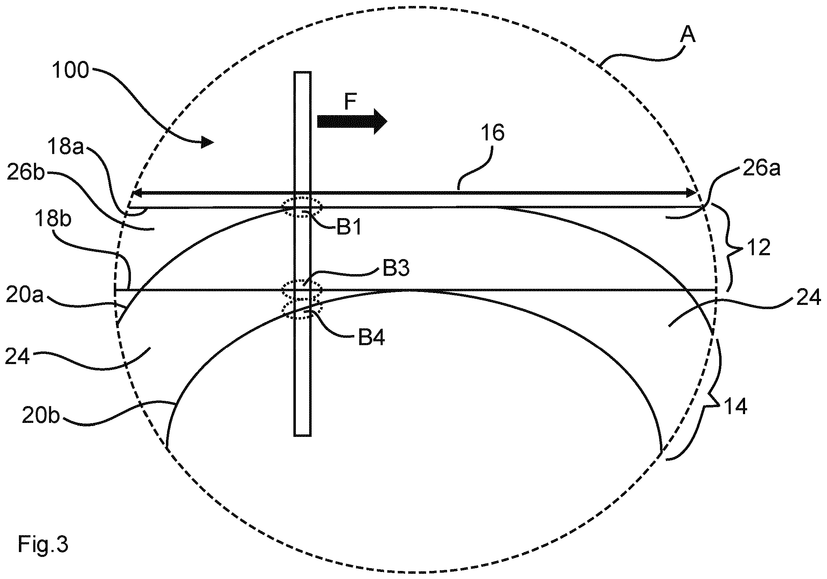

In Fig. 3 ist der Ausschnitt A aus Fig. 2 mit einer anderen Position der Sämaschine 100 dargestellt, welche sich in ihrer Fahrtrichtung F verglichen mit der Darstellung Fig. 2 weiterbewegt hat. Die Sämaschine 100 bewegt sich mit ihrer Fahrtrichtung F entlang des Routenabschnittes 16, welcher die Vorgewendefahrten 26a, 26b des Bewegungspfads P der Sämaschine 100 umfasst. Entlang des Routenabschnitts 16 verläuft der fahrtroutenabschnittsfolgende Fahrgassenabschnitt 12, in welchem die Sämaschine 100 während des Sävorgangs in den Bereichen B1, B3 die Fahrspuren 18a, 18b des Fahrgassensystems auf der landwirtschaftlichen Nutzfläche N erzeugt. Zudem passiert die Sämaschine 100 den fahrtroutenabschnittsfremden Fahrgassenabschnitt 14 eines Wendemanövers 24 des Bewegungspfads P der Sämaschine 100, in welchem die Sämaschine 100 während des Sävorgangs in dem Bereichen B4 die Fahrspuren 20b des Fahrgassensystems auf der landwirtschaftlichen Nutzfläche N erzeugt. Die Fahrspuren 18a, 18b und die Fahrspur 20b werden erzeugt, indem die Sämaschine während des Sävorgangs die Saatgutablage temporär und bereichsweise in den Bereichen B1, B3, B4 unterbricht.

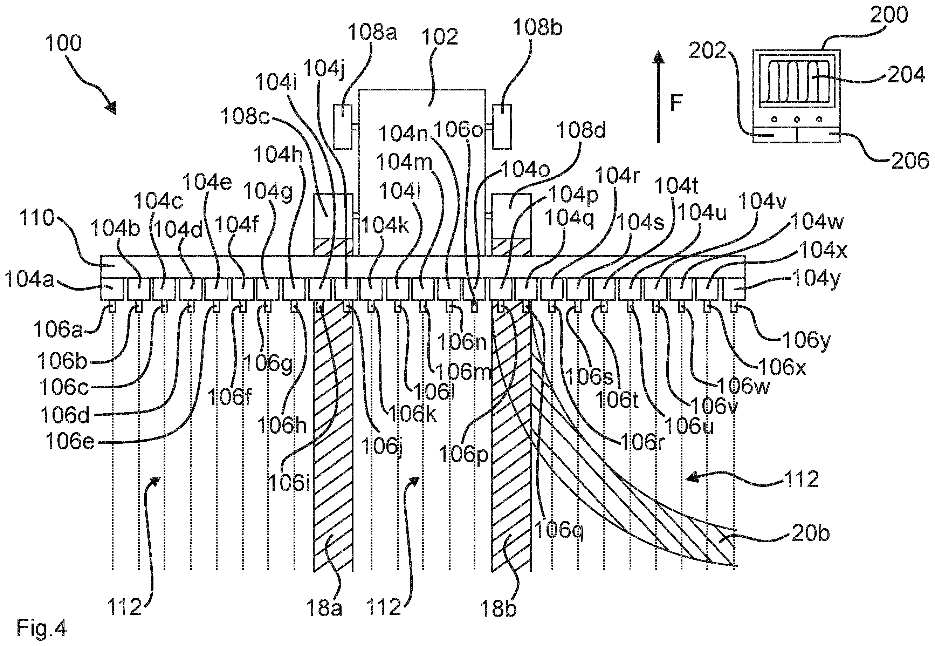

Die Fig. 4 zeigt die Sämaschine 100 bei einem Sävorgang auf der landwirtschaftlichen Nutzfläche N. Die Sämaschine 100 ist eine Anbaumaschine und wird von einem Trägerfahrzeug 102 getragen. Die Sämaschine 100 umfasst einen Träger 110. Das Trägerfahrzeug 102 ist ein Traktor und umfasst Räder 108a-108d, mittels welchen der Maschinenverbund aus Trägerfahrzeug 102 und Sämaschine 100 auf der Nutzfläche N in ihre Fahrtrichtung F bewegt wird. An dem Träger 110 der Sämaschine 100 sind als Vereinzelungseinrichtungen ausgebildete Dosiereinrichtungen 104a-104y angeordnet, mittels welcher Saatgut 112 aus einem oder aus mehreren Vorratsbehältern der Sämaschine 100 zu einzelnen Saatgutkörnern vereinzelt wird. Mittels der Saatgutablageeinrichtungen 106a-106y wird das vereinzelte Saatgut 112 auf der Nutzfläche N abgelegt. Die Dosiereinrichtungen 104a-104y und die Saatgutablageeinrichtungen 106a-106y sind quer zur Fahrtrichtung F der Sämaschine 100 nebeneinander an dem Träger 110 angeordnet.

Die Sämaschine 100 legt während des Sävorgangs ein Fahrgassensystem auf der landwirtschaftlichen Nutzfläche N an. In den Bereichen der Nutzfläche N, welche von den Rädern 108a-108d befahren werden, legt die Sämaschine 100 die zum aktuellen Routenabschnitt 16 der Sämaschine 100 zugeordneten Fahrspuren 18a, 18b eines fahrtroutenabschnittsfolgenden Fahrgassenabschnitts 12 des auf der Nutzfläche anzulegenden Fahrgassensystems an. Zum Anlegen der Fahrspuren 18a, 18b des fahrtroutenabschnittsfolgenden Fahrgassenabschnitts 12 wird die Saatgutablage mittels der Saatgutablageeinrichtungen 106i, 106j, 106p, 106q unterbrochen, sodass in den Bereichen, die von den Rädern 108a-108d des Trägerfahrzeugs 102 befahren werden, kein Saatgut abgelegt wird. Zum Unterbrechen der Saatgutablage mittels der Saatgutablageeinrichtungen 106i, 106j, 106p, 106q werden die als Vereinzelungseinrichtungen ausgebildeten Dosiereinrichtungen 104i, 104j, 104p, 104q ausgeschaltet, sodass die Saatgutzufuhr zu den Saatgutablageeinrichtungen 106i, 106j, 106p, 106q unterbrochen ist und somit dort kein Saatgut 112 auf der Nutzfläche N abgelegt wird.

In der in Fig. 4 dargestellten Situation während des Sävorgangs hat die Sämaschine 100 zudem die Fahrspur 20b eines fahrtroutenabschnittsfremden Fahrgassenabschnitts 14 des auf der Nutzfläche N anzulegenden Fahrgassensystems angelegt. Die Fahrspur 20b ist nicht dem aktuellen Routenabschnitt 16 zugeordnet, sondern kann während des Sävorgangs beispielsweise erst zu einem späteren Zeitpunkt befahren werden oder bereits zu einem früheren Zeitpunkt befahren worden sein, sodass sich die Saatgutablageeinrichtungen 106s-106y der Sämaschine 100 beim Befahren des Routenabschnitts 16 beim Anlegen des fahrtroutenabschnittsfolgenden Fahrgassenabschnitts 12 temporär und bereichsweise über die Fahrspur 20b des fahrtroutenabschnittsfremden Fahrgassenabschnitts 14 bewegen.

Zum Anlegen der Fahrspur 20b des fahrtroutenabschnittsfremden Fahrgassenabschnitts 14 des Fahrgassensystems wird die Saatgutablage mittels der Saatgutablageeinrichtungen 106s-106y jeweils so temporär unterbrochen, dass in dem Bereich der Fahrspur 20b kein Saatgut abgelegt wird. Zum Unterbrechen der Saatgutablage mittels der Saatgutablageeinrichtungen 106s-106y werden die als Vereinzelungseinrichtung ausgebildeten Dosiereinrichtungen 104s-104y temporär ausgeschaltet, sodass die Saatgutzufuhr zu den Saatgutablageeinrichtungen 106s-106y unterbrochen ist und somit dort kein Saatgut 112 auf der Nutzfläche N abgelegt wird. In den Fahrspuren 18a, 18b, 20b wachsen folglich keine Pflanzen, sodass nachfolgend die Fahrspuren 18a, 18b, 20b befahrene landwirtschaftliche Maschinen keine Pflanzen zerstören.

Mittels einer Datenverarbeitungseinrichtung 200 wird der zu dem Fahrgassensystem auf der landwirtschaftlichen Nutzfläche N führende Sävorgang geplant. Die elektronische Datenverarbeitungseinrichtung 200 ist als Bedienterminal für die Sämaschine 100 ausgebildet. Die elektronische Datenverarbeitungseinrichtung 200 ermittelt zudem Steuerungsvorgaben für die Sämaschine 100 zum Anlegen des Fahrgassensystems auf der Nutzfläche N auf Grundlage eines ebenfalls mittels der elektronischen Datenverarbeitungseinrichtung 200 ermittelten Fahrgassenverlaufsplans 10. Die von der elektronischen Datenverarbeitungseinrichtung 200 ermittelten Steuerungsvorgaben geben vor, zu welchen Zeitpunkten und/oder in welchen Zeitintervallen die Saatgutablage mittels der Saatgutablageeinrichtungen 106a-106y unterbrochen wird, um fahrtroutenabschnittsfolgende Fahrgassenabschnitte 12 und fahrtroutenabschnittsfremde Fahrgassenabschnitte 14 während des Sävorgangs anzulegen. Die Steuerungsvorgaben können zum Unterbrechen der Saatgutablage Schaltvorgänge vorgeben, zu welchen Zeitpunkten und/oder in welchen Zeitintervallen die Dosiereinrichtungen 104a-104y abgeschaltet werden müssen.

Mittels einer Datenerfassungseinrichtung 202 können Fahrgassendaten über die auf der Nutzfläche N angelegten Fahrgassen aufgezeichnet und/oder gespeichert und auf einer elektronischen Anzeigevorrichtung 204 angezeigt werden. Durch das Aufzeichnen und/oder Speichern sowie das Anzeigen von Fahrgassendaten zu den angelegten Fahrgassen kann der Arbeitsprozess überwacht werden, beispielsweise durch einen Bediener der Sämaschine, sodass Fehler beim Anlegen des Fahrgassensystems erkannt und ein Benutzereingriff erfolgen kann. Die Datenerfassungseinrichtung 202 ist Bestandteil des Bedienterminals für die Sämaschine 100. Die elektronische Anzeigevorrichtung 204 ist als Display des Bedienterminals ausgebildet. Mittels der Steuerungseinrichtung 206, welche ebenfalls Bestandteil des Bedienterminals ist, kann die Sämaschine 100 so gesteuert werden, dass sie sich selbsttätig auf der Nutzfläche N bewegt und/oder die Saatgutablage zum Anlegen der fahrtroutenabschnittsfolgenden Fahrgassenabschnitte 12 und/oder zum Anlegen der fahrtroutenabschnittsfremden Fahrgassenabschnitte 14 selbsttätig unterbrochen wird.

### Bezugszeichen

- 10: Fahrgassenverlaufsplan
- 12: fahrtroutenabschnittsfolgender Fahrgassenabschnitt
- 14: fahrtroutenabschnittsfremder Fahrgassenabschnitt
- 16: Routenabschnitt
- 18a, 18b: Fahrspuren
- 20a, 20b: Fahrspuren
- 22: Parallelfahrt
- 24: Wendemanöver
- 26a, 26b: Vorgewendefahrt
- 28: Feldeinfahrt
- 30: Feldausfahrt

- 100: Sämaschine
- 102: Trägerfahrzeug
- 104a-104y: Dosiereinrichtungen
- 106a-106y: Saatgutablageeinrichtungen
- 108a-108c: Räder
- 110: Träger
- 112: Saatgut

- 200: elektronische Datenverarbeitungseinrichtung
- 202: Datenerfassungseinrichtung
- 204: elektronischen Anzeigevorrichtung
- 206: Steuerungseinrichtung

- A: Ausschnitt
- B1-B4: Bereich
- F: Fahrtrichtung
- G: Feldgrenze
- N: landwirtschaftliche Nutzfläche
- P: Bewegungspfad
- S: Fahrgassensystem

## Patentansprüche

1. Verfahren zum Planen eines zu einem Fahrgassensystem auf einer landwirtschaftlichen Nutzfläche (N) führenden Sävorgangs mittels einer elektronischen Datenverarbeitungseinrichtung (200), mit den Schritten:
- Ermitteln eines Fahrgassenverlaufsplans (10) für die landwirtschaftliche Nutzfläche (N); und
- Ermitteln von Steuerungsvorgaben für eine Sämaschine (100) zum Anlegen des Fahrgassensystems auf der landwirtschaftlichen Nutzfläche (N) auf Grundlage des Fahrgassenverlaufsplans (10) durch Bewegen der Sämaschine (100) entlang einer mehrere Routenabschnitte (16) umfassenden Fahrtroute, wobei die ermittelten Steuerungsvorgaben ein temporäres und bereichsweises Unterbrechen der Saatgutablage zum Anlegen von fahrtroutenabschnittsfolgenden Fahrgassenabschnitten (12) vorgeben, welche entlang der jeweiligen Routenabschnitte (16) verlaufen;
**dadurch gekennzeichnet, dass** die ermittelten Steuerungsvorgaben zusätzlich ein temporäres und bereichsweises Unterbrechen der Saatgutablage zum Anlegen von fahrtroutenabschnittsfremden Fahrgassenabschnitten (14) vorgeben, welche nicht entlang der jeweiligen Routenabschnitte (16) verlaufen, und welche sich mit den Fahrspuren der fahrtroutenabschnittsfolgenden Fahrgassenabschnitte kreuzen und/oder zumindest teilweise überlappen.

2. Verfahren nach Anspruch 1,
**dadurch gekennzeichnet, dass** beim temporären und bereichsweisen Unterbrechen der Saatgutablage eine oder mehrere Dosiereinrichtungen (104a-104y) für Saatgut (112) temporär abgeschaltet werden, wobei die Steuerungsvorgaben Schaltvorgänge zum Abschalten der einen oder der mehreren Dosiereinrichtungen (104a-104y) vorgeben.

3. Verfahren nach einem der Ansprüche 1 oder 2,
**dadurch gekennzeichnet, dass** beim temporären und bereichsweisen Unterbrechen der Saatgutablage ein oder mehrere Saatgutströme zu einer oder zu mehreren Saatgutablageeinrichtungen (106a-106y) temporär unterbrochen werden, wobei die Steuerungsvorgaben zum Unterbrechen des einen oder der mehreren Saatgutströme vorzugsweise Schaltvorgänge zum temporären Verschließen und Öffnen von einer oder mehreren Saatgutleitungen vorgeben.

4. Verfahren nach einem der vorstehenden Ansprüche,
**dadurch gekennzeichnet, dass** die fahrtroutenabschnittsfolgenden Fahrgassenabschnitte (12) und die fahrtroutenabschnittsfremden Fahrgassenabschnitte (14) jeweils zwei Fahrspuren (18a, 18b, 20a, 20b) umfassen,
wobei die Steuerungsvorgaben ein temporäres und bereichsweises Unterbrechen der Saatgutablage vorgeben, sodass während des Anlegens der fahrtroutenabschnittsfolgenden Fahrgassenabschnitte (12) zeitweise eine oder beide Fahrspuren (18a, 18b, 20a, 20b) der fahrtroutenabschnittsfremden Fahrgassenabschnitte (14) erzeugt werden.

5. Verfahren nach einem der vorstehenden Ansprüche,
**dadurch gekennzeichnet, dass** die fahrtroutenabschnittsfremden Fahrgassenabschnitte (14) gekrümmte und/oder gradlinige Abschnitte umfassen.

6. Verfahren nach einem der vorstehenden Ansprüche,
**dadurch gekennzeichnet, dass** das Ermitteln des Fahrgassenverlaufsplans (10) für die landwirtschaftliche Nutzfläche (N) auf Grundlage eines oder mehrerer bereits erfolgter Bearbeitungsvorgänge erfolgt.

7. Verfahren nach einem der vorstehenden Ansprüche,
**dadurch gekennzeichnet, dass** beim Ermitteln des Fahrgassenverlaufsplans (10) die Maschineneigenschaften von Maschinen berücksichtigt werden, welche das anzulegende Fahrgassensystem bei nachfolgenden Bearbeitungsvorgängen befahren sollen.

8. Verfahren zum Anlegen eines Fahrgassensystems (10) auf einer landwirtschaftlichen Nutzfläche (N), mit den Schritten:
- Bewegen einer Sämaschine (100) entlang einer mehrere Routenabschnitte (16) umfassenden Fahrtroute auf der landwirtschaftlichen Nutzfläche (N) während eines Sävorgangs;
- temporäres und bereichsweises Unterbrechen der Saatgutablage während des Bewegens der Sämaschine (100) entlang der Fahrtroute zum Anlegen von fahrtroutenabschnittsfolgenden Fahrgassenabschnitten (12), welche entlang der jeweiligen Routenabschnitte (16) verlaufen, auf Grundlage von Steuerungsvorgaben,
**gekennzeichnet durch** den Schritt:
- temporäres und bereichsweises Unterbrechen der Saatgutablage während des Bewegens der Sämaschine (100) entlang der Fahrtroute zum Anlegen von fahrtroutenabschnittsfremden Fahrgassenabschnitten (14), welche nicht entlang der jeweiligen Routenabschnitte (16) verlaufen, auf Grundlage der Steuerungsvorgaben, und welche sich mit den Fahrspuren der fahrtroutenabschnittsfolgenden Fahrgassenabschnitte kreuzen und/oder zumindest teilweise überlappen.

9. Verfahren nach Anspruch 8,
mit dem Schritt:
- Planen des Sävorgangs mittels einer elektronischen Datenverarbeitungseinrichtung (200), wobei die Steuerungsvorgaben beim Planen des Sävorgangs ermittelt werden,
**dadurch gekennzeichnet, dass** das Planen des Sävorgangs nach einem der Ansprüche 1 bis 7 erfolgt.

10. Verfahren nach einem der Ansprüche 8 oder 9,
**dadurch gekennzeichnet, dass** das temporäre und bereichsweise Unterbrechen der Saatgutablage zum Anlegen der fahrtroutenabschnittsfolgenden Fahrgassenabschnitte (12) und/oder zum Anlegen der fahrtroutenabschnittsfremden Fahrgassenabschnitte (14) selbsttätig erfolgt, wobei die Sämaschine (100) zum selbsttätigen Unterbrechen der Saatgutablage vorzugsweise mittels einer Steuerungseinrichtung (206) auf Grundlage der Steuerungsvorgaben gesteuert wird.

11. Verfahren nach einem der Ansprüche 8 bis 10,
**dadurch gekennzeichnet, dass** Fahrgassendaten über auf der landwirtschaftlichen Nutzfläche (N) angelegte Fahrgassen mittels einer Datenerfassungseinrichtung (202) aufgezeichnet und/oder gespeichert werden und/oder wobei die auf der landwirtschaftlichen Nutzfläche (N) angelegten Fahrgassen auf einer elektronischen Anzeigevorrichtung (204) während des Sävorgangs dargestellt wird.

12. Elektronische Datenverarbeitungseinrichtung (200) zum Planen eines zu einem Fahrgassensystem auf einer landwirtschaftlichen Nutzfläche (N) führenden Sävorgangs,
**dadurch gekennzeichnet, dass** die elektronische Datenverarbeitungseinrichtung (200) dazu eingerichtet ist, das Verfahren nach einem der Ansprüche 1 bis 7 auszuführen.

## Claims

1. Method for planning a sowing process, which results in a tramline system in an agricultural area (N), by means of an electronic data-processing device (200), the method comprising the steps of:
- determining a tramline route plan (10) for the agricultural area (N); and
- determining control specifications for a seed drill (100) in order to create the tramline system in the agricultural area (N) on the basis of the tramline route plan (10) by moving the seed drill (100) along a travel route comprising a plurality of route sections (16), wherein the determined control specifications specify an interruption of the seed placement, temporarily and in regions, in order to create tramline sections (12) which follow the travel route sections and run along the respective route sections (16);
**characterized in that** the determined control specifications additionally specify an interruption of the seed placement, temporarily and in regions, in order to create tramline sections (14) which are not part of the route sections, which do not run along the respective route sections (16) and which intersect and/or at least partially overlap the lanes of the tramline sections following the route sections.

2. Method according to claim 1,
**characterized in that** when the seed placement is interrupted, temporarily and in regions, one or more metering devices (104a-104y) for seed (112) are temporarily switched off, wherein the control specifications specify switching operations for switching off the one or more metering devices (104a-104y).

3. Method according to either claim 1 or 2,
**characterized in that,** when the seed placement is interrupted, temporarily and in regions, one or more seed flows to one or more seed placement devices (106a-106y) are temporarily interrupted, wherein the control specifications for interrupting the one or more seed flows preferably specify switching operations for temporarily closing and opening one or more seed lines.

4. Method according to any of the preceding claims,
**characterized in that** the tramline sections (12) which follow the route sections and the tramline sections (14) which are not part of the route sections each comprise two lanes (18a, 18b, 20a, 20b),
wherein the control specifications specify an interruption of the seed placement, temporarily and in regions, so that, during the creation of the tramline sections (12) following the route sections, one or both lanes (18a, 18b, 20a, 20b) of the tramline sections (14) which are not part of the route sections are temporarily created.

5. Method according to any of the preceding claims,
**characterized in that** the tramline sections (14) which are not part of the route sections comprise curved and/or straight sections.

6. Method according to any of the preceding claims,
**characterized in that** the tramline route plan (10) for the agricultural area (N) is determined on the basis of one or more processing operations that have already been carried out.

7. Method according to any of the preceding claims,
**characterized in that** when determining the tramline route plan (10), consideration is given to the machine characteristics of machines which, during subsequent processing operations, are intended to travel on the tramline system to be created.

8. Method for creating a tramline system (10) in an agricultural area (N), comprising the steps of:
- moving a seed drill (100) along a route comprising a plurality of route sections (16) in the agricultural area (N) during a sowing process;
- interrupting seed placement, temporarily and in regions, while the seed drill (100) is moving along the route in order to create tramline sections (12) which follow route sections, and which run along the respective route sections (16), on the basis of control specifications,
**characterized by** the step of:
- interrupting the seed placement, temporarily and in regions, while the seed drill (100) is moving along the route in order to create tramline sections (14) which are not part of the route sections and, on the basis of the control specifications, do not run along the respective route sections (16), and which intersect and/or at least partially overlap the lanes of the tramline sections following the route sections.

9. Method according to claim 8, comprising the step of:
- planning the sowing process by means of an electronic data-processing device (200), wherein the control specifications are determined when planning the sowing process,
**characterized in that** the planning of the sowing process is carried out according to any of claims 1 to 7.

10. Method according to either claim 8 or 9,
**characterized in that** the interruption, temporarily and in regions, of seed placement in order to create the tramline sections (12) following the route sections and/or in order to create the tramline sections (14) which are not part of the route sections takes place automatically, wherein the seed drill (100) is controlled to automatically interrupt seed placement, preferably by means of a control device (206), on the basis of the control specifications.

11. Method according to any of claims 8 to 10,
**characterized in that** tramline data relating to tramlines created in the agricultural area (N) are recorded and/or stored by means of a data recording device (202) and/or wherein the tramlines created in the agricultural area (N) are displayed on an electronic display device (204) during the sowing process.

12. Electronic data-processing device (200) for planning a sowing process which results in a tramline system in an agricultural area (N),
**characterized in that** the electronic data-processing device (200) is designed to carry out the method according to any of claims 1 to 7.

## Revendications

1. Procédé permettant la planification d'un processus de semis conduisant à un système de jalonnement sur une surface agricole utile (N) à l'aide d'un dispositif électronique (200) de traitement de données, comprenant les étapes suivantes consistant à :
- déterminer un plan de tracé (10) de jalonnement pour la surface agricole utile (N) ; et
- déterminer des consignes de commande pour un semoir (100) pour la création du système de jalonnement sur la surface agricole utile (N) sur la base du plan de tracé (10) de jalonnement par déplacement du semoir (100) le long d'un itinéraire comprenant plusieurs tronçons de route (16), les consignes de commande déterminées prescrivant une interruption temporaire et par zones du dépôt de semences pour la création de tronçons de jalonnement (12) suivant les tronçons d'itinéraire, qui s'étendent le long des tronçons de route (16) respectifs ;
**caractérisé en ce que** les consignes de commande déterminées prescrivent en outre une interruption temporaire et par zones du dépôt de semences pour la création de tronçons de jalonnement (14) externes aux tronçons d'itinéraire, qui ne s'étendent pas le long des tronçons de route (16) respectifs et qui croisent et/ou chevauchent au moins partiellement les voies de circulation des tronçons de jalonnement suivant les tronçons d'itinéraire.

2. Procédé selon la revendication 1,
**caractérisé en ce que** lors de l'interruption temporaire et par zones du dépôt de semences, un ou plusieurs dispositifs de dosage (104a-104y) pour les semences (112) sont temporairement désactivés, les consignes de commande prescrivant des processus de commutation pour la désactivation d'un ou plusieurs dispositifs de dosage (104a-104y).

3. Procédé selon l'une des revendications 1 ou 2,
**caractérisé en ce que,** lors de l'interruption temporaire et par zones du dépôt de semences, un ou plusieurs flux de semences vers un ou plusieurs dispositifs de dépôt (106a-106y) de semences sont temporairement interrompus, les consignes de commande pour l'interruption du ou des plusieurs flux de semences prescrivant de préférence des processus de commutation pour la fermeture et l'ouverture temporaires d'une ou de plusieurs conduites à semences.

4. Procédé selon l'une des revendications précédentes,
**caractérisé en ce que** les tronçons de jalonnement (12) suivant les tronçons d'itinéraire et les tronçons de jalonnement (14) externes aux tronçons d'itinéraire comprennent chacun deux voies de circulation (18a, 18b, 20a, 20b), les consignes de commande prescrivant une interruption temporaire et par zones du dépôt de semences, de telle sorte que, pendant la création des tronçons de jalonnement (12) suivant les tronçons d'itinéraire, une ou les deux voies de circulation (18a, 18b, 20a, 20b) des tronçons de jalonnement (14) externes aux tronçons d'itinéraire sont temporairement générées.

5. Procédé selon l'une des revendications précédentes,
**caractérisé en ce que** les tronçons de jalonnement (14) externes aux tronçons d'itinéraire comprennent des tronçons incurvés et/ou rectilignes.

6. Procédé selon l'une des revendications précédentes,
**caractérisé en ce que** la détermination du plan de tracé (10) de jalonnement pour la surface agricole utile (N) s'effectue sur la base d'un ou plusieurs processus de traitement déjà effectués.

7. Procédé selon l'une des revendications précédentes,
**caractérisé en ce que,** lors de la détermination du plan de tracé (10) de jalonnement, les propriétés des machines qui doivent circuler sur le système de jalonnement à créer lors des processus de traitement suivantes sont prises en compte.

8. Procédé permettant la création d'un système de jalonnement (10) sur une surface agricole utile (N), comportant les étapes consistant à :
- déplacer un semoir (100) le long d'un itinéraire comprenant plusieurs tronçons de route (16) sur la surface agricole utile (N) pendant un processus de semis ;
- interrompre temporairement et par zones le dépôt de semences pendant le déplacement du semoir (100) le long de l'itinéraire pour la création de tronçons de jalonnement (12) suivant les tronçons d'itinéraire, qui s'étendent le long des tronçons de route (16) respectifs, sur la base de consignes de commande,
**caractérisé par** l'étape consistant à :
- interrompre temporairement et par zones le dépôt de semences pendant le déplacement du semoir (100) le long de l'itinéraire pour la création de tronçons de jalonnement (14) externes aux tronçons d'itinéraire, qui ne s'étendent pas le long des tronçons de route (16) respectifs, sur la base des consignes de commande, et qui croisent et/ou chevauchent au moins partiellement les voies de circulation des tronçons de jalonnement suivant les tronçons d'itinéraire.

9. Procédé selon la revendication 8, comportant l'étape consistant à :
- planifier le processus de semis à l'aide d'un dispositif électronique (200) de traitement de données, les consignes de commande étant déterminées lors de la planification du processus de semis,
**caractérisé en ce que** la planification du processus de semis est effectuée selon l'une des revendications 1 à 7.

10. Procédé selon l'une des revendications 8 ou 9,
**caractérisé en ce que** l'interruption temporaire et par zones du dépôt de semences pour la création des tronçons de jalonnement (12) suivant les tronçons d'itinéraire et/ou pour la création des tronçons de jalonnement (14) externes aux tronçons d'itinéraire s'effectue automatiquement, le semoir (100) étant commandé pour l'interruption automatique du dépôt de semences, de préférence à l'aide d'un dispositif de commande (206), sur la base des consignes de commande.

11. Procédé selon l'une des revendications 8 à 10,
**caractérisé en ce que** des données de jalonnement concernant des jalonnements créés sur la surface agricole utile (N) sont enregistrées et/ou mémorisées à l'aide d'un dispositif d'acquisition (202) de données et/ou les jalonnements créés sur la surface agricole utile (N) étant représentés sur un dispositif d'affichage électronique (204) pendant le processus de semis.

12. Dispositif électronique (200) de traitement de données permettant la planification d'un processus de semis conduisant à un système de jalonnement sur une surface agricole utile (N),
**caractérisé en ce que** le dispositif électronique (200) de traitement de données est conçu pour exécuter le procédé selon l'une des revendications 1 à 7.
